# EUROPEAN PATENT APPLICATION

(11) **EP 4 607 070 A1**
(43) Date of publication of application: **27.08.2025**
(21) Application number: 25159453.7
(22) Date of filing: 21.02.2025
(51) Int. Cl.: F16K 17/00, F16K 17/40, H01M 50/342, H01M 50/375, F16K 17/16

(54) **EXPLOSION PREVENTION VALVE, COVER PLATE ASSEMBLY, BATTERY CORE, BATTERY PACK, AND ELECTRICAL SYSTEM**

(30) Priority: 22.02.2024 CN 202410201037
(71) Applicant: BYD Company Limited, Shenzhen, Guangdong 518118 (CN)
(72) Inventor: YUAN, Wansong, Shenzhen, 518118 (CN); CHEN, Chong, Shenzhen, 518118 (CN); WANG, Xinyue, Shenzhen, 518118 (CN); DENG, Dongjun, Shenzhen, 518118 (CN)
(74) Representative: Taor, Simon Edward William

(57) **Abstract**

An explosion prevention valve, a cover plate assembly, a battery core, a battery pack, and an electrical system are provided. The explosion prevention valve includes a main body (1), an explosion prevention piece (2), and a temperature-sensitive film (3). The main body is provided with a pressure relief hole (11) extending through a thickness direction thereof. The explosion prevention piece and the temperature-sensitive film are connected with the main body, and are arranged to cover the pressure relief hole. The temperature-sensitive film is made of plastic. In technical solutions of the present disclosure, the temperature-sensitive film is arranged in the explosion prevention valve. When the battery core normally operates, a temperature of the explosion prevention valve is less than a preset temperature, and the temperature-sensitive film and the explosion prevention piece are arranged to jointly cover the pressure relief hole. In this case, an opening pressure PA₁ of the explosion prevention valve is maintained between 0.4 MPa and 1.2 MPa to prevent the explosion prevention valve from being accidentally opened. When the battery core is out of control, the temperature of the explosion prevention valve is greater than the preset temperature, the temperature-sensitive film is softened, and an opening pressure PA₂ of the explosion prevention valve is reduced to be between 0.2 MPa and 1 MPa. In this way, the explosion prevention valve can be opened in advance, which improves a response speed of the explosion prevention valve.

## Description

### FIELD

The present disclosure relates to the technical field of battery safety, and more specifically, to an explosion prevention valve, a cover plate assembly, a battery core, a battery pack, and an electrical system.

### BACKGROUND

A battery core is a device configured to convert chemical energy into electrical energy, which is widely applied to fields such as new energy vehicles and energy storage power stations. The battery core is provided with an explosion prevention valve. When a pressure in the battery core exceeds a preset opening pressure of the explosion prevention valve, the explosion prevention valve automatically opens, so that the pressure in the battery core is released, to ensure safe operation of the battery core.

In view of an operating characteristic of the explosion prevention valve, during research and development of the explosion prevention valve, a designer usually expects the explosion prevention valve to have a high opening pressure in a normal operating condition, to ensure that the explosion prevention valve is not accidentally opened, and expects the explosion prevention valve to have a small opening pressure when the battery is out of control, to increase an opening speed of the explosion prevention valve, so as to ensure safety of the battery core and surrounding battery cores.

However, in the related art, regardless of whether the battery core is out of control, the opening pressure of the explosion prevention valve can only be maintained at a fixed value. Therefore, the explosion prevention valve has poor adaptability to different operating conditions of the battery core.

### SUMMARY

An objective of the present disclosure is to provide an explosion prevention valve, a cover plate assembly, a battery core, a battery pack, and an electrical system, to resolve a problem that an explosion prevention valve in the related art has poor adaptability to various operating conditions of a battery core.

To achieve the objective of the present disclosure, in a first aspect, the present disclosure provides an explosion prevention valve. The explosion prevention valve includes a main body, an explosion prevention piece, and a temperature-sensitive film. The main body is provided with a pressure relief hole extending through a thickness direction thereof. The explosion prevention piece and the temperature-sensitive film are connected with the main body and arranged to cover the pressure relief hole. The temperature-sensitive film is made of plastic, to cause a critical breaking pressure value of the temperature-sensitive film to be inversely proportional to a temperature of the explosion prevention valve.

When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa.

When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In a possible example, the temperature-sensitive film is attached to the explosion prevention piece. The temperature-sensitive film is at least partially located on a side of the explosion prevention piece facing away from the main body.

In a possible example, the explosion prevention piece and the temperature-sensitive film meet a relationship. PA₄ = X * PA₃.

PA₄ is the critical breaking pressure value of the temperature-sensitive film when the temperature of the explosion prevention valve is less than the preset temperature.

PA₃ is the critical breaking pressure value of the explosion prevention piece.

X is a constant. 0.1 ≤ X ≤ 0.5.

In a possible example, the main body includes a first surface and a second surface arranged opposite to each other. The pressure relief hole extends through the first surface and the second surface.

The explosion prevention piece is arranged on the first surface. The temperature-sensitive film is arranged on the second surface.

In a possible example, the explosion prevention piece and the temperature-sensitive film meet a relationship. PA₄ = Y * PA₃.

PA₄ is the critical breaking pressure value of the temperature-sensitive film when the temperature of the explosion prevention valve is less than the preset temperature.

PA₃ is the critical breaking pressure value of the explosion prevention piece.

Y is a constant. 0.2 ≤ Y ≤ 0.6.

In a possible example, the critical breaking pressure value of the explosion prevention piece is PA₃. 0.2 Mpa ≤ PA₃ ≤ 0.8 Mpa.

In a possible example, the critical breaking pressure value of the explosion prevention piece is PA₃. 0.3 Mpa ≤ PA₃ ≤ 1 Mpa.

In a possible example, the temperature-sensitive film meets a relationship PA₃ = Z * PA₄.

PA₄ is the critical breaking pressure value of the temperature-sensitive film when the temperature of the explosion prevention valve is less than the preset temperature.

PA₃ is the critical breaking pressure value of the temperature-sensitive film when the temperature of the explosion prevention valve is greater than the preset temperature.

Z is a constant. 0 ≤ Z ≤ 0.25.

In a possible example, the preset temperature is T. 55° ≤ T ≤ 65°.

In a possible example, the temperature-sensitive film includes at least two temperature-sensitive layers stacked in sequence in an axial direction of the pressure relief hole.

In a possible example, the plastic includes at least one of polypropylene, polyethylene, and polyethylene terephthalate.

In a possible example, the temperature-sensitive layers adopt same plastic.

In a possible example, the temperature-sensitive layer includes a first temperature-sensitive layer, a second temperature-sensitive layer, and a third temperature-sensitive layer. The third temperature-sensitive layer is connected with the main body.

Materials of the first temperature-sensitive layer and the third temperature-sensitive layer include polypropylene. A material of the second temperature-sensitive layer includes polyethylene terephthalate.

In a second aspect, the present disclosure further provides a cover plate assembly. The cover plate assembly includes an explosion prevention valve. The explosion prevention valve includes a main body, an explosion prevention piece, and a temperature-sensitive film. The main body is provided with a pressure relief hole extending through a thickness direction thereof. The explosion prevention piece and the temperature-sensitive film are connected with the main body and arranged to cover the pressure relief hole. The temperature-sensitive film is made of plastic, to cause a critical breaking pressure value of the temperature-sensitive film to be inversely proportional to a temperature of the explosion prevention valve,

When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa.

When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In a third aspect, the present disclosure further provides a battery core. The battery core includes a cover plate assembly. The cover plate assembly includes an explosion prevention valve. The explosion prevention valve includes a main body, an explosion prevention piece, and a temperature-sensitive film. The main body is provided with a pressure relief hole extending through a thickness direction thereof. The explosion prevention piece and the temperature-sensitive film are connected with the main body and arranged to cover the pressure relief hole. The temperature-sensitive film being made of plastic, to cause a critical breaking pressure value of the temperature-sensitive film to be inversely proportional to a temperature of the explosion prevention valve,

When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa.

When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In a fourth aspect, the present disclosure further provides a battery pack. The battery pack includes a battery core. The battery core includes a cover plate assembly. The cover plate assembly includes an explosion prevention valve. The explosion prevention valve includes a main body, an explosion prevention piece, and a temperature-sensitive film. The main body is provided with a pressure relief hole extending through a thickness direction thereof. The explosion prevention piece and the temperature-sensitive film are connected with the main body and arranged to cover the pressure relief hole. The temperature-sensitive film is made of plastic, to cause a critical breaking pressure value of the temperature-sensitive film to be inversely proportional to a temperature of the explosion prevention valve,

When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa.

When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In a fifth aspect, the present disclosure further provides an electrical system. The electrical system includes a battery pack. The battery pack includes a cover plate assembly. The cover plate assembly includes an explosion prevention valve. The explosion prevention valve includes a main body, an explosion prevention piece, and a temperature-sensitive film. The main body is provided with a pressure relief hole extending through a thickness direction thereof. The explosion prevention piece and the temperature-sensitive film are connected with the main body and arranged to cover the pressure relief hole. The temperature-sensitive film is made of plastic, to cause a critical breaking pressure value of the temperature-sensitive film to be inversely proportional to a temperature of the explosion prevention valve,

When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa.

When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In technical solutions of the present disclosure, the temperature-sensitive film is arranged in the explosion prevention valve. When the battery core normally operates, a temperature of the explosion prevention valve is less than a preset temperature, and the temperature-sensitive film and the explosion prevention piece are arranged to jointly cover the pressure relief hole. In this case, the opening pressure PA₁ of the explosion prevention valve is maintained between 0.4 MPa and 1.2 MPa to prevent the explosion prevention valve from being accidentally opened. When the battery core is out of control, the temperature of the explosion prevention valve is greater than the preset temperature, the temperature-sensitive film is softened, and the opening pressure PA₂ of the explosion prevention valve is reduced to be between 0.2 MPa and 1 MPa. In this way, the explosion prevention valve can be opened in advance by the pressure of the battery core, which improves a response speed of the explosion prevention valve.

### BRIEF DESCRIPTION OF THE DRAWINGS

To describe technical solutions in examples of the present disclosure or in the related art more clearly, drawings required for describing the examples or the related art are briefly described below. Apparently, the drawings in the following description show only some of the examples of the present disclosure, and a person of ordinary skill in the art may derive other drawings from these drawings without creative efforts.
FIG. 1 is a schematic structural diagram of an example of an explosion prevention valve according to the present disclosure;
FIG. 2 is a sectional view of an example of fitting of an explosion prevention piece, a temperature-sensitive film, and a main body in FIG. 1;
FIG. 3 is a schematic structural diagram of the main body in FIG. 1;
FIG. 4 is a front view of the explosion prevention piece and the temperature-sensitive film;
FIG. 5 is a sectional view of FIG. 4;
FIG. 6 is an enlarged view of S in FIG. 5;
FIG. 7 is a schematic structural diagram of the temperature-sensitive film in FIG. 1; and
FIG. 8 is a sectional view of another example of assembly of the explosion prevention piece, the temperature-sensitive film, and the main body in FIG. 1.

In the drawings:
100-Explosion prevention valve;
1-Main body, 11-Pressure relief hole, 12-Mounting groove;
2-Explosion prevention piece, 21-Scored groove, 211-Pressure relief region;
3-Temperature-sensitive film, 31-Temperature-sensitive layer, 31a-First temperature-sensitive layer, 31b-Second temperature-sensitive layer, 31c-Third temperature-sensitive layer.

### DETAILED DESCRIPTION

Technical solutions in examples of the present disclosure are clearly and completely described below with reference to drawings in the examples of the present disclosure. Apparently, the described examples are merely some rather than all of the examples of the present disclosure. All other examples obtained by a person of ordinary skill in the art based on the examples of the present disclosure without creative efforts fall within the protection scope of the present disclosure.

It should be noted that, when an assembly is referred to as "being fixed to" another assembly, the assembly may be directly located on the another assembly, or an intermediate assembly may exist. When an assembly is considered to be "connected with" another assembly, the assembly may be directly connected with the another assembly, or an intermediate assembly may exist.

Unless otherwise defined, meanings of all technical and scientific terms used in this specification are the same as those usually understood by a person skilled in the art of the present disclosure. In the present disclosure, terms used in the specification are merely intended to describe objectives of the specific examples, and are not intended to limit the present disclosure. A term "and/or" used in the present disclosure includes any or all combinations of one or more related listed items.

Some examples of the present disclosure are described below in detail with reference to the drawings. The following examples and features in the examples may be combined with each other in a case that no conflict occurs.

The present disclosure provides an electrical system. The electrical system may be applied to a vehicle, an industrial production line, or a household appliance, which is not limited in the present disclosure. For example, when the electrical system is applied to a vehicle, the vehicle may be an electric vehicle, a fuel vehicle, or a hybrid vehicle, which is not limited in the present disclosure. The vehicle may be a car, an off-road vehicle, a truck, or a forklift, which is not limited in the present disclosure.

The electrical system includes a battery pack and an electrical device. The electrical device is mounted to a body of the vehicle. The electrical device may be an engine of the vehicle, an instrument board of the vehicle, or a door or a window of the vehicle, which is not limited in the present disclosure. The battery pack is arranged in a mounting cavity of the vehicle. The battery pack is connected with the electrical device. The battery pack is configured to store electrical energy and release the electrical energy when the electrical device needs electricity, to maintain normal use of the electrical device.

The battery pack includes a box and a battery core. The box is used as a main body of the battery pack, and is configured to provide support and connection for assemblies of the battery pack. The box is provided with a battery core compartment. The battery core is arranged in the battery core compartment. The battery core is used as an energy source for the battery pack. The battery core is configured to store and release the electrical energy.

The battery core includes a housing, a cover plate assembly, and an electrode core. An accommodating cavity having an opening on a side is formed on housing. An electrolyte solution is arranged in the accommodating cavity. The electrode core is accommodated in the accommodating cavity. The electrode core can react with the electrolyte solution in the accommodating cavity to store and release electrical energy. The cover plate assembly cover is arranged to cover the opening of the accommodating cavity. The cover plate assembly is configured to seal the accommodating cavity, to prevent dust and impurities outside the battery core from entering the accommodating cavity, so as to maintain stable operation of the battery core in the accommodating cavity.

The cover plate assembly includes a cover plate and an explosion prevention valve. The cover plate is arranged to cover the opening of the accommodating cavity. The explosion prevention valve is arranged on the cover plate. The explosion prevention valve is configured to be opened when a pressure in the accommodating cavity exceeds a preset opening pressure, to release an air pressure in the accommodating cavity, so as to ensure safe operation of the battery core and surrounding battery cores. During daily use of the explosion prevention valve, a designer usually expects the pressure of the explosion prevention valve to vary with an operating condition of the battery core. To be specific, when the battery core is in a normal operating condition, the explosion prevention valve can have a high opening pressure, to ensure that the explosion prevention valve is not accidentally opened. When the battery is out of control, the explosion prevention valve can have a small opening pressure, to increase an opening speed of the explosion prevention valve, thereby ensuring safety of the battery core.

However, in the related art, regardless of whether the battery core is out of control, the opening pressure of the explosion prevention valve can only be maintained at a fixed value. Therefore, the explosion prevention valve has poor adaptability to different operating conditions of the battery core.

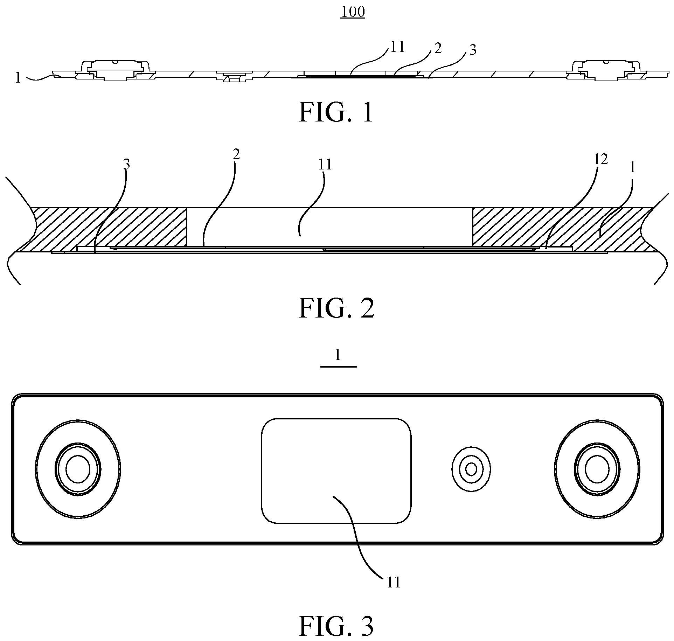

To resolve the foregoing problem, with reference to FIG. 1, in the present disclosure, an explosion prevention valve 100 includes a main body 1, an explosion prevention piece 2, and a temperature-sensitive film 3. The main body 1 is provided with a pressure relief hole 11 extending through a thickness direction thereof. The explosion prevention piece 2 is connected with the main body 1. The explosion prevention piece 2 is arranged to cover the pressure relief hole 11. The temperature-sensitive film 3 is connected with the main body 1. The temperature-sensitive film 3 is arranged to cover the pressure relief hole 11. The temperature-sensitive film 3 is made of plastic, to cause a critical breaking pressure value of the temperature-sensitive film 3 to be inversely proportional to a temperature of the explosion prevention valve 100. When the temperature of the explosion prevention valve is less than a preset temperature, a critical pressure value causing both the explosion prevention piece and the temperature-sensitive film to break is PA₁. 0.4 Mpa ≤ PA₁ ≤ 1.2 Mpa. When the temperature of the explosion prevention valve is greater than the preset temperature, a critical pressure value causing both the explosion prevention piece and the temperature-sensitive film to break is PA₂. 0.2 Mpa ≤ PA₂ ≤ 1 Mpa.

In technical solutions of the present disclosure, the temperature-sensitive film is arranged in the explosion prevention valve. When the battery core normally operates, a temperature of the explosion prevention valve is less than a preset temperature, and the temperature-sensitive film and the explosion prevention piece are arranged to jointly cover the pressure relief hole. In this case, the opening pressure PA₁ of the explosion prevention valve is maintained between 0.4 MPa and 1.2 MPa to prevent the explosion prevention valve from being accidentally opened. When the battery core is out of control, the temperature of the explosion prevention valve is greater than the preset temperature, the temperature-sensitive film is softened, and the opening pressure PA₂ of the explosion prevention valve is reduced to be between 0.2 MPa and 1 MPa. In this way, the explosion prevention valve can be opened in advance by the pressure of the battery core, which achieves safety protection of the battery core.

Assemblies of the explosion prevention valve 100 provided in the present disclosure are described in detail below with reference to the drawings.

With reference to FIG. 2 and FIG. 3, the explosion prevention valve 100 provided in the present disclosure includes the main body 1. The main body 1 is used as a body of the explosion prevention valve 100, and is configured to provide support and connection for each assembly of the explosion prevention valve 100. The main body 1 is connected with the cover plate. The main body 1 and the cover plate may be integrally formed, or may be separately formed and then connected to each other. In an example of the present disclosure, the main body 1 and the cover plate are integrally formed. The main body 1 may be used as the body structure of the explosion prevention valve 100, and is configured to provide support and connection for the explosion prevention piece 2 and the temperature-sensitive film 3. The main body may be further used as the opening of the body structure of the cover plate assembly arranged in the accommodating cavity, and is configured to provide support and connection for other assemblies arranged on the cover plate assembly, such as a pole and a spacer.

The main body 1 is provided with the pressure relief hole 11. The pressure relief hole 11 is in communication with the accommodating cavity. The explosion prevention piece 2 is connected with the main body 1. The explosion prevention piece 2 and the main body 1 may be connected by bonding, hot melting, or soldering, which is not limited in the present disclosure. The explosion prevention piece 2 is made of metal. The metal may be aluminum, iron, or steel, which is not limited in the present disclosure.

In a possible example of the present disclosure, the explosion prevention piece 2 is soldered to the main body 1. A fixing portion is formed on an outer edge of the explosion prevention piece 2 by soldering. The explosion prevention piece 2 is connected to the main body 1 through the fixing portion. During the soldering of the explosion prevention piece 2 to the main body 1, a soldering seam is formed on a peripheral side of the fixing portion. In this example, an outer edge of an orthographic projection of the fixing portion is located within an orthographic projection of the temperature-sensitive film 3, to shield the soldering seam on the peripheral side of the fixing portion through the temperature-sensitive film 3, so as to prevent foreign solder objects from falling into the accommodating cavity and affecting the normal use of the electrode core in the accommodating cavity during the soldering of the explosion prevention piece 2 to the main body 1.

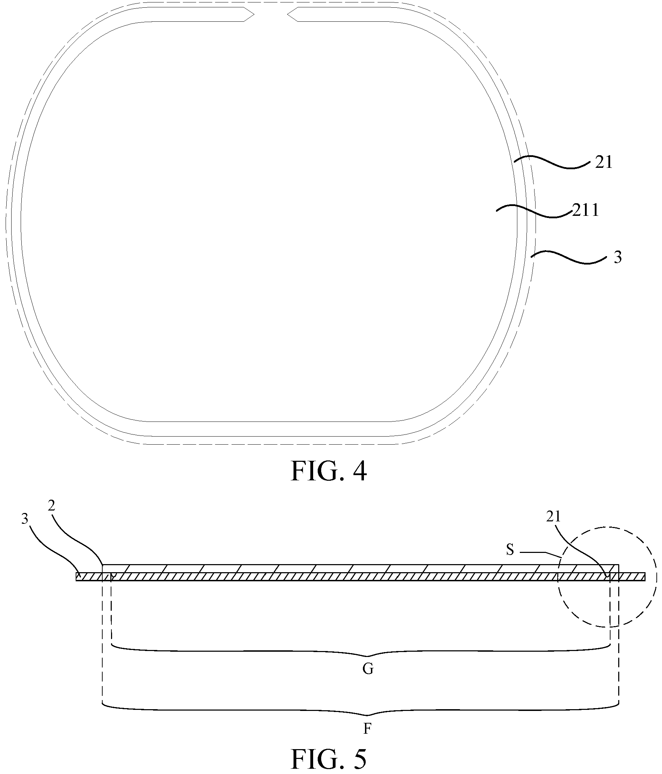

With reference to FIG. 4, the explosion prevention piece 2 is arranged to cover the pressure relief hole 11. A scored groove 21 configured to adjust the critical breaking pressure value of the explosion prevention piece 2 is arranged on the explosion prevention piece 2. The scored groove 21 is arranged on a side of the explosion prevention piece 2 facing the temperature-sensitive film 3. A pressure relief region 211 is defined on an outer edge of the scored groove 21. When a pressure on the explosion prevention piece 2 is greater than the critical breaking pressure value of the explosion prevention piece 2, the pressure immediately breaks through the pressure relief region 211 and is released. A depth of the scored groove 21 may be adjusted to adjust the critical breaking pressure value of the explosion prevention piece 2. It should be noted that the critical breaking pressure value of the explosion prevention piece 2 refers to a minimum pressure value required causing the explosion prevention piece 2 to breaking. When the pressure on the explosion prevention piece 2 is greater than the critical breaking pressure value of the explosion prevention piece 2, the explosion prevention piece 2 breaks, thereby enabling the pressure in the accommodating cavity to be released through the pressure relief hole 11.

To ensure that the critical breaking pressure value of the explosion prevention piece 2 meets a use requirement of the explosion prevention valve 100, the critical breaking pressure value of the explosion prevention piece is PA₃. PA₃ needs to meet a relationship 0.2 Mpa ≤ PA₃ ≤ 0.8 Mpa or 0.3 Mpa ≤ PA₃ ≤ 1 Mpa. 0.2 Mpa ≤ PA₃ ≤ 0.8 Mpa defines the critical breaking pressure value of the explosion prevention piece 2 when the explosion prevention piece 2 is applied to a lithium-iron battery. 0.3 Mpa ≤ PA₃ ≤ 1 Mpa defines the critical breaking pressure value of the explosion prevention piece 2 when the explosion prevention piece 2 is applied to a ternary lithium battery. After testing, under the defined critical breaking pressure value, not only it can be ensured that the opening pressure of the explosion prevention valve 100 is greater than a safe opening pressure, which reduces a possibility that the explosion prevention valve 100 is accidentally opened, but also it can be ensured that the explosion prevention piece 2 can be quickly broken by the air pressure in the accommodating cavity when the battery core is out of control. In this way, the response speed of explosion prevention valve 100 is improved.

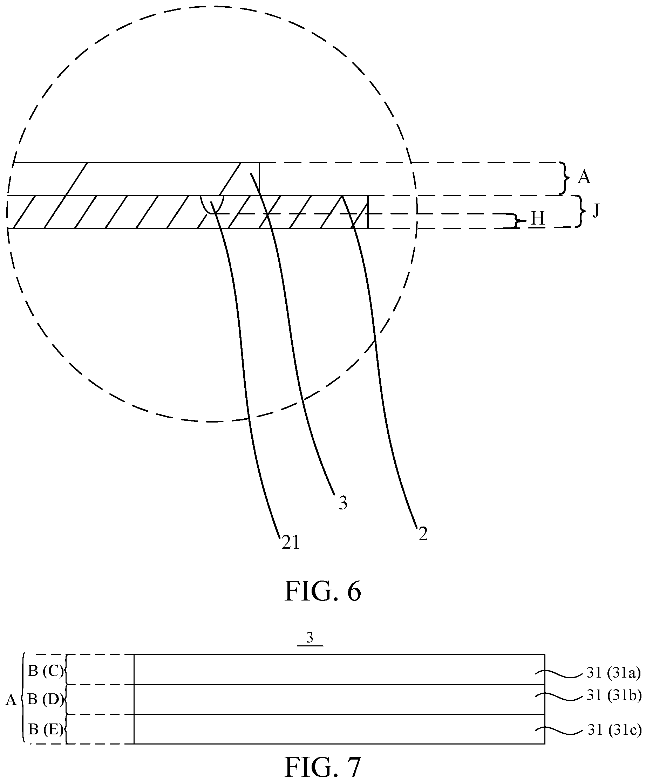

With reference to FIG. 5 and FIG. 6, to ensure that the explosion prevention piece meets of the foregoing critical breaking pressure value, in a possible example of the present disclosure, the explosion prevention piece 2 meets at least one of the following relationships: 0.02 mm ≤ H ≤ 0.1 mm and 0.2 mm ≤ J ≤ 1 mm. H is a minimum distance from a bottom of the scored groove 21 to a side of the explosion prevention piece 2 facing away from the temperature-sensitive film 3. J is a thickness of the explosion prevention piece 2. Under the defined dimension, not only it can be ensured that the opening pressure of the explosion prevention valve 100 is greater than the safe opening pressure, which reduces the possibility that the explosion prevention valve 100 is accidentally opened, but also it can be ensured that the explosion prevention piece 2 can be quickly broken by the air pressure in the accommodating cavity when the battery core is out of control. In this way, the response speed of explosion prevention valve 100 is improved.

In a possible example of the present disclosure, an outer edge of an orthographic projection of the scored groove 21 is located within the orthographic projection of the temperature-sensitive film 3. In this way, the entire pressure relief region 211 is covered by the temperature-sensitive film 3, which increases a contact area between the temperature-sensitive film 3 and the pressure relief region 211, thereby reducing a possibility that the pressure in the accommodating cavity bypasses the temperature-sensitive film 3 and directly acts on the pressure relief region 211. In this way, the opening pressure of the explosion prevention valve 100 is increased, thereby reducing the possibility that the explosion prevention valve 100 is accidentally opened.

In a possible example of the present disclosure, the pressure relief region 211 and the temperature-sensitive film 3 meet a relationship 1 mm ≤ F - G ≤ 1.5 mm. F is a length of the temperature-sensitive film 3 in a length direction of the explosion prevention valve 100. G is a length of the pressure relief region 211 in the length direction of the explosion prevention valve 100. F - G is a difference between the length of the temperature-sensitive film 3 in the length direction of the explosion prevention valve 100 and the length of the pressure relief region 211 in the length direction of the explosion prevention valve 100. Under the defined dimension, not only it can be ensured that the temperature-sensitive film 3 completely covers the pressure relief region 211, but also a material for temperature-sensitive film 3 is reduced, which reduces manufacturing costs of temperature-sensitive film 3.

The temperature-sensitive film 3 is connected with the main body 1. The temperature-sensitive film 3 may be bonded with the main body 1 through glue, or may be connected to the main body 1 through hot melting. The temperature-sensitive film 3 is configured to be arranged to cover the pressure relief hole 11 together with the explosion prevention piece 2. The temperature-sensitive film 3 is made of plastic. The plastic may be polypropylene, polyethylene, or polyethylene terephthalate. The plastic is configured to cause the critical breaking pressure value of the temperature-sensitive film 3 to be inversely proportional to the temperature of the explosion prevention valve 100. When the battery core is in the normal operating condition, the temperature-sensitive film 3 and the explosion prevention piece 2 jointly cover the pressure relief hole 11 of the main body 1, to increase the opening pressure of the pressure relief hole 11, so as to reduce the risk of accidentally opening the pressure relief hole 11. When the battery core is out of control, a high temperature generated after the battery core is out of control quickly softens the temperature-sensitive film 3, to reduce the critical breaking pressure value of the temperature-sensitive film 3, so as to reduce the opening pressure of the explosion prevention valve 100, thereby opening the valve in advance.

To describe beneficial effects of opening the valve in advance through the temperature-sensitive film 3, it is assumed that a safe opening pressure of each explosion prevention valve 100 is 1 MPa. The safe opening pressure refers to a minimum opening pressure each qualified explosion prevention valve 100 needs to have. If the opening pressure of the explosion prevention valve 100 is less than the safe opening pressure, the explosion prevention valve 100 is opened in advance, which affects the normal use of the battery core. An opening pressure of an explosion prevention valve in the related art and the opening pressure of the explosion prevention valve provided in the present disclosure both adopt the safe opening pressure. In the related art, the opening pressure of the explosion prevention valve 100 is constant. Therefore, in the related art, the explosion prevention valve 100 can be opened only when the air pressure in the accommodating cavity reaches 1 MPa. In the present disclosure, the critical breaking pressure value of the temperature-sensitive film 3 may be set to 0.4 MPa, and the critical breaking pressure value of the explosion prevention piece 2 may be set to 0.6 MPa. In this case, the opening pressure of the explosion prevention valve 100 is 1 MPa, which is consistent with the minimum opening **pressure** of the explosion prevention valve 100. However, when the battery core is out of control, the temperature-sensitive film 3 is softened, and the critical breaking pressure value of the temperature-sensitive film 3 is reduced to 0. In this case, the opening pressure of the explosion prevention valve 100 is the critical breaking pressure value of the explosion prevention piece 2, which is 0.6 Mpa. In other words, in this case, the explosion prevention valve 100 can be opened when the air pressure in the accommodating cavity of the battery core reaches 0.6 Mpa. Compared with the related art, the explosion prevention valve 100 of the present disclosure requires a smaller opening pressure, has a higher response speed, and achieves higher safety performance for the battery core.

The preset temperature of the explosion prevention valve 100 is T, and 55° ≤ T ≤ 65°. Under the defined dimension, it can be ensured that neither the explosion prevention valve 100 is opened in advance as a result of the temperature-sensitive film being softened in advance, nor the response speed of the explosion prevention valve 100 and safety performance of the battery core are affected as a result of the temperature-sensitive film 3 being softened excessively late. Specifically, when T = 60°, the temperature-sensitive film 3 can balance a relationship between the opening force and the response speed more effectively.

The explosion prevention piece 2 defines the opening pressure of the explosion prevention valve 100 when the battery core is out of control. The temperature-sensitive film 3 defines the opening pressure of the explosion prevention valve 100 when the battery core is in the normal operating condition. To meet the forgoing relationship of changing of the opening pressure of the explosion prevention valve, in a possible example of the present disclosure, the temperature-sensitive film meets a relationship PA₃ = Z * PA₄. PA₄ is a critical breaking pressure value of the temperature-sensitive film 3 when the temperature of the explosion prevention valve 100 is less than the preset temperature. PA₃ is a critical breaking pressure value of the temperature-sensitive film 3 when the temperature of the explosion prevention valve 100 is greater than the preset temperature. Z is a constant, and 0 ≤ Z ≤ 0.25. It can be learned from the test that, when the temperature of the explosion prevention valve 100 reaches 60°, the critical breaking pressure value of the temperature-sensitive film 3 may be reduced to 1/4 of the critical breaking pressure value of the temperature-sensitive film 3 before the battery core is out of control, when the temperature of the explosion prevention valve 100 reaches 80°, the critical breaking pressure value of the temperature-sensitive film 3 may be reduced to 1/20 of the critical breaking pressure value of the temperature-sensitive film 3 before the battery core is out of control, and when the temperature of the explosion prevention valve 100 reaches 120°, the critical breaking pressure value of the temperature-sensitive film 3 may be reduced to 0. In this way, impact of the temperature-sensitive film on the opening force of the explosion prevention valve 100 when the battery core is out of control is minimized, thereby improving the response speed of the explosion prevention valve 100.

To meet the foregoing relationship, the plastic used in the temperature-sensitive film 3 includes at least one of polypropylene, polyethylene, and polyethylene terephthalate. A thickness of the temperature-sensitive film 3 is A, and 0.05 mm ≤ A ≤ 0.5 mm. After testing, it is found under the foregoing defined materials and dimensions, not only it can be ensured that the temperature-sensitive film 3 maintains a high opening force in a normal state of the battery core, which reduces the possibility that the explosion prevention valve 100 is accidentally opened, but also it can be ensured that the temperature-sensitive film 3 is quickly melted when the battery core is out of control, which improves the response speed of the explosion prevention valve 100.

With reference to FIG. 7, due to a limited existing material forming technology, micropores are formed on a surface during formation of the temperature-sensitive film 3. A larger molding thickness of the temperature-sensitive film 3 leads to a larger quantity of micropores on the surface of the temperature-sensitive film 3. When the temperature-sensitive film 3 contacts the electrolyte solution in the battery core, the electrolyte solution seeps into the micropores, accelerating corrosion of the temperature-sensitive film. To resolve the foregoing problem, with reference to FIG. 6, in a possible example of the present disclosure, the temperature-sensitive film 3 includes multiple temperature-sensitive layers 31. The two temperature-sensitive layers 31 are stacked in sequence in an axial direction of the pressure relief hole 11 and connected with each other to form the final temperature-sensitive film 3. Two, three, or four temperature-sensitive layers 31 may be arranged, which is not limited in the present disclosure. In the present disclosure, the relatively thick temperature-sensitive film 3 is split into multiple relatively thin temperature-sensitive layers 31, to reduce a quantity of micropores on the surface of the temperature-sensitive film 3, and prolong a service life of the temperature-sensitive film 3.

The temperature-sensitive layers 31 may adopt a same material or different materials, which is not limited in the present disclosure. In a possible example of the present disclosure, the temperature-sensitive layers 31 adopt the same material, to maintain consistent melting points of the temperature-sensitive layers 31, thereby reducing difficulty in hot-melt connection of each temperature-sensitive layer 31 and improving production efficiency of the temperature-sensitive film 3.

When the temperature-sensitive layers 31 adopt the same material, the material of the temperature-sensitive layers 31 may be polypropylene, polyethylene, or polyethylene terephthalate, which is not limited in the present disclosure. In a possible example of the present disclosure, the material of each temperature-sensitive layer 31 includes polyethylene. The polyethylene has higher adhesion to metal than the other materials, which can improve stability of the connection between the temperature-sensitive film 3 and the main body 1.

To ensure that the temperature-sensitive film meets the relationship PA₃ = Z * PA₄ when the temperature-sensitive layers 31 adopt the same material, in a possible example of the present disclosure, the thickness of the temperature-sensitive film 3 is set to A, 0.12 mm ≤ A ≤ 0.18 mm, a thickness of each temperature-sensitive layer 31 is set to B, and 0.04 mm ≤ B ≤ 0.06 mm. Under the defined dimensions, neither a case that the temperature-sensitive film 3 composed of the multiple temperature-sensitive layers 31 of the same type is softened excessively quickly and thereby causes the explosion prevention valve 100 to be opened in advance occurs, nor a case that the temperature-sensitive film is softened excessively slowly and thereby affects the response speed of the explosion prevention valve 100 occurs.

The temperature-sensitive layers 31 may alternatively adopt different materials. Specifically, in this example, the temperature-sensitive layer 31 includes a first temperature-sensitive layer 31a, a second temperature-sensitive layer 31b, and a third temperature-sensitive layer 31c. The third temperature-sensitive layer 31c is connected with the main body 1. Materials of the first temperature-sensitive layer 31a and the third temperature-sensitive layer 31c include polypropylene. A material of the second temperature-sensitive layer 31b includes polyethylene terephthalate. The second temperature-sensitive layer 31b is used as the main body 1 of the temperature-sensitive film 3. Polyethylene terephthalate can effectively improve extensibility of the second temperature-sensitive layer 31b, which increases the opening force of the explosion prevention valve 100, thereby reducing the possibility that the explosion prevention valve 100 is accidentally opened. The first temperature-sensitive layer 31a and the third temperature-sensitive layer 31c are arranged on two sides of the first temperature-sensitive layer 31a. The first temperature-sensitive layer 31a and the third temperature-sensitive layer 31c are made of polypropylene with high hardness, to provide protection for the second temperature-sensitive layer 31b, so as to prevent the second temperature-sensitive layer 31b from being punctured by another object during fitting of the explosion prevention valve 100, thereby improving a yield of the explosion prevention valve 100.

To ensure that the temperature-sensitive film 3 meets the relationship PA₃ = Z * PA₄ when the temperature-sensitive layers 31 adopt different materials, in a possible example of the present disclosure, the temperature-sensitive film 3, the first temperature-sensitive layer 31a, the second temperature-sensitive layer 31b, and the third temperature-sensitive layer 31c meet at least one of the following relationships: 0.07 mm ≤ A ≤ 0.13 mm, 0.02 mm ≤ C ≤ 0.04 mm, 0.03 mm ≤ D ≤ 0.05 mm, and 0.02 mm ≤ E ≤ 0.04 mm. A is a thickness of the temperature-sensitive film 3, C is a thickness of the first temperature-sensitive layer 31a, D is a thickness of the second temperature-sensitive layer 31b, and E is a thickness of the third temperature-sensitive layer 31c. Under the defined dimensions, neither a case that the temperature-sensitive film 3 composed of the multiple temperature-sensitive layers 31 of the same type is softened excessively quickly and thereby causes the explosion prevention valve 100 to be opened in advance occurs, nor a case that the temperature-sensitive film is softened excessively slowly and thereby affects the response speed of the explosion prevention valve 100 occurs.

With reference to FIG. 2, the explosion prevention piece 2 and the temperature-sensitive film 3 may be arranged in multiple manners. The explosion prevention piece 2 and the temperature-sensitive film 3 may be arranged to cover the pressure relief hole 11 along a same side of the main body 1, or may be arranged to cover two ends of the pressure relief hole 11 respectively along two sides of the main body 1, which is not limited in the present disclosure. In a possible example of the present disclosure, the temperature-sensitive film 3 and the explosion prevention piece 2 are arranged on a side of the main body 1 facing the accommodating cavity. The temperature-sensitive film 3 is attached to the explosion prevention piece 2. The temperature-sensitive film 3 is at least partially located on a side of the explosion prevention piece 2 facing away from the main body 1. When the battery core is in the normal operating condition, the temperature-sensitive film 3 and the explosion prevention piece 2 are attached to each other and partially support each other, to increase the opening pressure of the explosion prevention valve 100. When the battery core is out of control, the temperature-sensitive film 3 is softened, and the critical breaking pressure value of the temperature-sensitive film 3 is reduced. In this way, the valve opening speed of the explosion prevention valve 100 when the battery core is out of control is increased. In addition, since the temperature-sensitive film 3 and the explosion prevention piece 2 are arranged along the same side of the main body 1, the temperature-sensitive film 3, the explosion prevention piece 2, and the main body 1 may be connected to each other through one hot-melting, which improves fitting efficiency of the explosion prevention valve 100.

To improve stability of the arrangement of the explosion prevention piece 2, in a possible example of the present disclosure, a mounting groove 12 is arranged on a side of the main body 1. The mounting groove 12 is in communication with the pressure relief hole 11. A side of the mounting groove 12 away from the pressure relief hole 11 is provided with a notch. The explosion prevention piece 2 is arranged in the mounting groove 12. The temperature-sensitive film 3 is arranged to cover the notch. The mounting groove 12 is arranged to not only provide positioning for the arrangement of the explosion prevention piece 2, thereby improving the stability of the connection between the explosion prevention piece 2 and the main body, but also reduce a height of the explosion prevention piece 2 protruding from the main body 1, so as to reserve a space for the temperature-sensitive film 3 to extend outward under a pressure. In this way, the opening pressure of explosion prevention valve 100 is increased, thereby reducing the possibility that the explosion prevention valve 100 is accidentally opened.

When the temperature-sensitive film 3 and the explosion prevention piece 2 are attached to each other, to ensure that the explosion prevention valve 100 is opened in time when the battery core is out of control, in a possible example of the present disclosure, the explosion prevention piece 2 and the temperature-sensitive film 3 meet a relationship PA₄ = X * PA₃. PA₄ is the critical breaking pressure value of the temperature-sensitive film 3 when the temperature of the explosion prevention valve 100 is less than the preset temperature. PA₃ is the critical breaking pressure value of the explosion prevention piece 2. X is a constant, and X meets 0.1 ≤ X ≤ 0.5. In other words, when the temperature-sensitive film 3 and the explosion prevention piece 2 are attached to each other, the critical breaking pressure value of the temperature-sensitive film 3 when the temperature of the explosion prevention valve 100 is less than the preset temperature is between one-tenth and one-half of the critical breaking pressure value of the explosion prevention piece 2. Under the defined relationship, neither a case that the opening pressure of the explosion prevention valve 100 excessively concentrates on the explosion prevention piece 2 and thereby leads to difficulty in opening the explosion prevention piece 2 after the temperature-sensitive film 3 is softened occurs, nor a case that the opening pressure of the explosion prevention valve 100 excessively concentrates on the temperature-sensitive film 3, increases the thickness of the temperature-sensitive film 3, and prolongs softening time of the temperature-sensitive film 3 and thereby reduces the response speed of the explosion prevention valve 100 occurs.

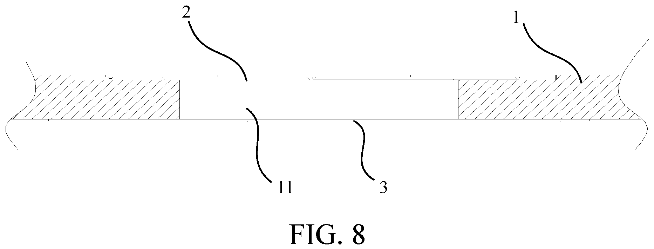

With reference to FIG. 8. in another possible example of the present disclosure, the explosion prevention piece 2 and the temperature-sensitive film 3 may be respectively arranged on two sides of the main body 1. Specifically, in a possible example of the present disclosure, the main body 1 includes a first surface and a second surface arranged opposite to each other. The second surface is arranged to face the accommodating cavity. The pressure relief hole 11 extends through the first surface and the second surface. The explosion prevention piece 2 is arranged on the first surface. The temperature-sensitive film 3 is arranged on the second surface. When the temperature-sensitive film 3 is under the pressure from the accommodating cavity, the temperature-sensitive film 3 may extend and deform in the pressure relief hole 11, and finally contacts the explosion prevention piece 2 arranged on an other side of the pressure relief hole 11, so as to share the air pressure from the accommodating cavity with the explosion prevention piece 2. In this way, the opening pressure of the explosion prevention valve 100 is increased, thereby reducing the possibility that the explosion prevention valve 100 is accidentally opened. Moreover, the pressure relief hole 11 reserves a space for the temperature-sensitive film 3 to extend. In this way, the critical breaking pressure value of the temperature-sensitive film 3 is increased, which increases the opening pressure of the explosion prevention valve 100, thereby reducing the possibility that the explosion prevention valve 100 is accidentally opened.

It may be understood that, in the foregoing example, a depth of the pressure relief hole 11 affects the critical breaking pressure value of the temperature-sensitive film 3. If the depth of the pressure relief hole 11 is excessively large, the temperature-sensitive film 3 cannot contact the explosion prevention piece 2, affecting the normal use of the temperature-sensitive film 3. If the depth of the pressure relief hole 11 is excessively small, the extension space of the temperature-sensitive film 3 is affected, reducing the critical breaking pressure value of the temperature-sensitive film 3. To resolve the foregoing problems, in a possible example of the present disclosure, the depth of the pressure relief hole 11 is set to K, and 0.5 mm ≤ K ≤ 2 mm. Under the defined dimension, not only it can be ensured that the temperature-sensitive film 3 is attached to the explosion prevention piece 2, but also it can be ensured that the temperature-sensitive film 3 has a specific ductility. In this way, the critical breaking pressure value of the temperature-sensitive film 3 is increased, which increases the opening pressure of the explosion prevention valve 100, thereby reducing the possibility that the explosion prevention valve 100 is accidentally opened.

It may be understood that the pressure relief hole 11 can increase an extension distance of the temperature-sensitive film 3, thereby increasing the critical breaking pressure value of the temperature-sensitive film 3. Therefore, when the opening pressure of the explosion prevention valve 100 and the thickness of the temperature-sensitive film 3 remain unchanged, the temperature-sensitive film 3 may be assigned with a larger critical breaking pressure value. In a possible example of the present disclosure, the explosion prevention piece 2 and the temperature-sensitive film 3 satisfy a relationship PA₄ = Y * PA₃. PA₄ is the critical breaking pressure value of the temperature-sensitive film 3 when the temperature of the explosion prevention valve 100 is less than the preset temperature. PA₃ is the critical breaking pressure value of the explosion prevention piece 2. Y is a constant, and 0.2 ≤ Y ≤ 0.6. In other words, in this case, the critical breaking pressure value assigned to the explosion prevention piece 2 is between 1/5 and 3/5 of the critical breaking pressure value of the explosion prevention piece 2. In this way, the critical breaking pressure value of the explosion prevention piece 2 is reduced, which reduces the pressure required for opening the explosion prevention piece 2, thereby improving the response speed of the explosion prevention valve 100.

In the description of the examples of the present disclosure, it should be noted that orientation or position relationships indicated by terms such as "center", "up", "down", "left", "right", "vertical", "horizontal", "inside", and "outside" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

The foregoing content disclosed above is merely preferred examples of the present disclosure, and certainly is not intended to limit the scope of the claims of the present disclosure. A person of ordinary skill in the art may understand all or some of the processes for implementing the foregoing examples, and equivalent changes made according to the claims of the present disclosure still fall within the scope covered by the present disclosure.

## Claims

1. An explosion prevention valve, comprising a main body, an explosion prevention piece, and a temperature-sensitive film, the main body being arranged with a pressure relief hole extending through a thickness direction thereof, the explosion prevention piece and the temperature-sensitive film being connected with the main body and arranged to cover the pressure relief hole, and the temperature-sensitive film being made of plastic so as to cause a critical breaking pressure value of the temperature-sensitive film to be inversely proportional to a temperature of the explosion prevention valve;
wherein when the temperature of the explosion prevention valve is less than a preset temperature, a first critical pressure value PA₁ causing both the explosion prevention piece and the temperature-sensitive film to break satisfies PA₁, 0.4 Mpa ≤ PA₁ ≤ 1.2 Mpa; and
wherein when the temperature of the explosion prevention valve is greater than the preset temperature, a second critical pressure value PA₂ causing both the explosion prevention piece and the temperature-sensitive film to break satisfies PA₂, 0.2 Mpa ≤ PA₂ ≤ 1 Mpa.

2. The explosion prevention valve according to claim 1, wherein the temperature-sensitive film is attached to the explosion prevention piece; and the temperature-sensitive film is at least partially located on a side of the explosion prevention piece and facing away from the main body.

3. The explosion prevention valve according to claim 2, wherein the explosion prevention piece and the temperature-sensitive film meet a relationship PA₄ = X * PA₃,
wherein PA₄ is a critical breaking pressure value of the temperature-sensitive film when the temperature of the explosion prevention valve is less than the preset temperature;
PA₃ is a critical breaking pressure value of the explosion prevention piece;
X is a constant; and 0.1 ≤ X ≤ 0.5.

4. The explosion prevention valve according to claim 1, wherein the main body comprises a first surface and a second surface arranged opposite to each other; the pressure relief hole extends through the first surface and the second surface;
the explosion prevention piece is arranged on the first surface; and the temperature-sensitive film is arranged on the second surface.

5. The explosion prevention valve according to claim 4, wherein the explosion prevention piece and the temperature-sensitive film meet a relationship PA₄ = Y * PA₃,
wherein PA₄ is a critical breaking pressure value of the temperature-sensitive film when the temperature of the explosion prevention valve is less than the preset temperature;
PA₃ is a critical breaking pressure value of the explosion prevention piece;
Y is a constant; and 0.2 ≤ Y ≤ 0.6.

6. The explosion prevention valve according to any of claims 1 to 5, wherein a critical breaking pressure value of the explosion prevention piece is PA₃; and 0.2 Mpa ≤ PA₃ ≤ 0.8 Mpa.

7. The explosion prevention valve according to any of claims 1 to 5, wherein a critical breaking pressure value of the explosion prevention piece is PA₃; and 0.3 Mpa ≤ PA₃ ≤ 1 Mpa.

8. The explosion prevention valve according to any of claims 1 to 5, wherein the temperature-sensitive film meets a relationship PA₃ = Z * PA₄,
wherein PA₄ is a critical breaking pressure value of the temperature-sensitive film when the temperature of the explosion prevention valve is less than the preset temperature;
PA₃ is a critical breaking pressure value of the temperature-sensitive film when the temperature of the explosion prevention valve is greater than the preset temperature;
Z is a constant; and 0 ≤ Z ≤ 0.25.

9. The explosion prevention valve according to any one of claims 1 to 8, wherein the preset temperature is T; and 55° ≤ T ≤ 65°.

10. The explosion prevention valve according to any of claims 1 to 5, wherein the temperature-sensitive film comprises at least two temperature-sensitive layers stacked in sequence in an axial direction of the pressure relief hole.

11. The explosion prevention valve according to claim 10, wherein the plastic comprises at least one of polypropylene, polyethylene, and polyethylene terephthalate;
optionally wherein the temperature-sensitive layers adopt same plastic;
optionally wherein the temperature-sensitive layer comprises a first temperature-sensitive layer, a second temperature-sensitive layer, and a third temperature-sensitive layer; the third temperature-sensitive layer is connected with the main body; wherein materials of the first temperature-sensitive layer and the third temperature-sensitive layer comprise polypropylene; and a material of the second temperature-sensitive layer comprises polyethylene terephthalate.

12. A cover plate assembly, comprising the explosion prevention valve according to any of claims 1 to 11.

13. A battery core, comprising the cover plate assembly according to claim 12.

14. A battery pack, comprising the battery core according to claim 13.

15. An electrical system, comprising the battery pack according to claim 14.
